# EUROPEAN PATENT SPECIFICATION

(11) **EP 1 387 071 B1**
(45) Date of publication and mention of the grant of the patent: **23.08.2006**
(21) Application number: 03013478.7
(22) Date of filing: 25.06.2003
(51) Int. Cl.: F02D 41/04, F02D 41/40, F01N 3/023

(54) **Engine exhaust gas purification apparatus**
Vorrichtung zur Reinigung von Abgasen
Dispositif de purification de gaz d'échappement

(30) Priority: 31.07.2002 JP 2002222654
(43) Date of publication of application: 04.02.2004
(73) Proprietor: Mazda Motor Corporation, Aki-gun, Hiroshima 730-8670 (JP)
(72) Inventor: Hayashibara, Hiroshi, Aki-gun, Hiroshima 730-8670 (JP); Saito, Tomoaki, Aki-gun, Hiroshima 730-8670 (JP); Kataoka, Motoshi, Aki-gun, Hiroshima 730-8670 (JP); Shoya, Taizou, Aki-gun, Hiroshima 730-8670 (JP); Tsushio, Yoshinori, Aki-gun, Hiroshima 730-8670 (JP); Ueoka, Toshitsugu, Aki-gun, Hiroshima 730-8670 (JP); Harada, Kouichiro, Aki-gun, Hiroshima 730-8670 (JP)
(74) Representative: Müller-Boré & Partner Patentanwälte

(56) References cited:
- EP-A- 1 128 051
- EP-A- 1 160 435
- EP-A- 1 170 474
- DE-A- 10 033 159
- DE-A- 10 056 016
- PATENT ABSTRACTS OF JAPAN vol. 1996, no. 02, 29 February 1996 (1996-02-29) -& JP 07 259533 A (NIPPON SOKEN INC), 9 October 1995 (1995-10-09)

## Description

The present invention relates to an exhaust gas purification apparatus of a diesel engine, having DPFs (Diesel Particulate Filters) disposed in exhaust passages.

Regarding a diesel engine including a DPF disposed in an exhaust passage, Japanese Unexamined Patent Application Publication No. 2001-303980 discloses that when the amount of soot collected in a DPF is required to be reduced, the temperature of the DPF is increased and soot is then combusted. More specifically, a fuel injection valve is controlled to perform a main-injection of fuel at around the pressure-stroke top dead center of a cylinder, and a post-injection of the fuel is performed during the expansion stroke after the main-injection. Thereby, the fuel is fed to the DPF. In this case, the fuel is oxidized and reaction heat occurring in the reaction causes the DPF temperature rise, thereby burning off the soot.

The publication additionally describes that, before the post-injection, exhaust gas flow rate is reduced to cause a temperature rise of exhaust gas. The publication further describes as follows. When the temperature of the DPF is less than the level of a predetermined temperature, the engine increases the exhaust gas temperature by reducing the exhaust gas flow rate. On the other hand, when the temperature of the DPF has reached the level of the predetermined temperature, the fuel is fed by the post-injection.

However, although the post-injection is effective for increasing the DPF temperature, the fuel in injected in the post-injection reaches the DPF and deposited therein. In this case, when the DPF temperature rises, there is a possibility in that previously deposited fuel is abruptly combusted, thereby occurring cracking to the DPF. In particular, suppose the DPF is used that is a monolithic-honeycomb ceramic filter of a wall flow type in which entries and exits of honeycomb cells are alternately sealed. In this case, the deposited fuel is abruptly combusted, causing abrupt rises in, for example, combustion pressure and temperature, whereby the DPF is rendered prone to cracking.

EP 0 170 474 discloses an engine exhaust gas purification apparatus comprising a diesel particulate filter which is regenerated by performing a post-injection of fuel during the expansion stroke or the exhaust stroke of the engine.

JP 07 259 533 discloses an engine exhaust gas purification apparatus comprising a catalyst-included filter which is heated by performing an expansion stroke injection to increase the exhaust gas temperature and which is regenerated by performing an exhaust stroke injection to combust the fuel by means of the catalyst thereby combusting the soot.

It is the object of the invention to provide an improved engine exhaust gas purification apparatus which may regenerate a particulate filter in a safe manner and within many operation conditions of the engine without producing cracks of the particulate filter.

This object is fulfilled by an apparatus having the features disclosed in claim 1.

In order to achieve these objects, the present invention is arranged such that when a temperature rise of a DPF cannot be implemented by feeding a post-injection fuel even while soot in the DPF is required to be reduced, the post-injection is advanced in timing and is thereby executed.

That is, when executing a post-injection of fuel, as the timing of the post-injection advances (becomes faster), the ratio of fuel combusted in a cylinder increases, and non-combusted fuel to be discharged from the cylinder decreases. The present invention is therefore arranged such that when the temperature of the DPF (**13**) is equal to or less than the first predetermined temperature (**Tfo**), the post-injection timing is advanced to reduce the fuel that will be fed to a non-combusted state to the DPF (**13**) in the form of non-combusted fuel. The present invention thereby solves a problem in that fuel deposited in the DPF (**13**) is abruptly combusted and the DPF (**13**) is thereby cracked. In addition, with the post-injection timing thus advanced, the post-injection fuel to be combusted in the cylinder after top dead center in the compression stroke is increased, and the exhaust gas temperature is increased thereby. This is advantageous to quickly raise the temperature of the DPF (**13**) to a temperature sufficient to cause soot to be combusted.

When the temperature of the DPF (**13**) rises higher than the first predetermined temperature (**Tfo**), a retard in the post-injection timing causes an increase in the quantity of the post-injection fuel to be discharged into the exhaust passage (**11**) in a non-combusted state. Then, the combustion of the post-injection fuel is utilized to combust the soot collected in the DPF (**13**), thereby implementing regeneration of the DPF (**13**) (recovery of soot collecting capability). At a high temperature of the DPF (**13**), even when the post-injection fuel reaches the DPF (**13**), the fuel is quickly combusted (unlike the case where the temperature of the DPF (**13**) is low, no case occurs in which a large amount of post-injection fuel is deposited in the DPF (**13**), and the deposited fuel is combusted abruptly at a time). Accordingly, there is no generation of excessive combustion pressure or no abrupt rise in temperature, so that cracking of the DPF (**13**) can be prevented.

In this case, the predetermined temperature (**Tfo**) may be set either to a temperature causing the DPF (**13**) to commence combustion of soot or to the vicinity of the temperature. In a case where the DPF (**13**) coated with no oxidation catalyst is used, the predetermined temperature (**Tfo**) may be set to a temperature around the range from 500 to 550°C, for example. In a case where the DPF (**13**) coated with an oxidation catalyst, the predetermined temperature (**Tfo**) may be set to a temperature lower than the above-mentioned temperature. The post-injection timing when the temperature of the DPF (**13**) is equal to or less than the predetermined temperature (**Tfo**) may be, for example, between equal to or more than 30°CA (Crank Angle) and less than 60°CA ATDC (after top dead center in the compression stroke). The post-injection timing when the temperature of the DPF (**13**) becomes higher than the predetermined temperature (**Tfo**) may be between equal to more than 60°CA and equal to or less than 120°CA ATDC (preferably, between equal to or more than 80°CA and equal to or less than 100°CA).

Preferably, when the temperature of the DPF (**13**) is equal to or less than the first predetermined temperature (**Tfo**), the injection control means (**20**) executes the post-injection so that combustion of the post-injected fuel in the combustion chamber (**4**) commences in a period of time from a time point of 5 degrees before a crank angle at which a heat generation rate in the combustion of the main-injected fuel becomes approximately zero to a time point of 10 degrees after the crank angle.

That is, even in the case where soot collected in the DPF (**13**) is required to be reduced, when the temperature of the DPF (**13**) is equal to or less than the first predetermined temperature (**Tfo**), difficulties take place in removing soot collected therein. As such, the quantity of soot to be discharged from the engine is required to be as small as possible and, also, the discharge of non-combusted fuel is required to be reduced. In such a case, therefore, the present invention is arranged to execute the post-injection so that the combustion of the post-injection fuel in the combustion chamber commences at about a point of time at which the heat generation rate in a main-combustion (combustion of the main-injected fuel) becomes approximately zero.

More specifically, a soot generation mechanism in a diesel engine (**1**) is considered such that primary particulates are generated by thermal decomposition of an over-rich air/fuel mixture locally formed in a cylinder, polymerization and condensation thereof are repeated, nuclei of soot are thereby created, and they grow and coalesce with each other in a high temperature atmosphere. Thereby, the so-called soot is formed. The growth and condensation as described above are considered to continue until diffusion combustion of the fuel is about to terminate, that is, until the heat generation rate becomes approximately zero.

As such, when the heat generation rate in the main-combustion has become approximately zero, combustion of the post-injection fuel is commenced, and recombustion of soot generated in the above-described diffusion combustion is accelerated to thereby reduce the soot volume. In addition, the combustion of the post-injection fuel reduces the discharge amount of non-combusted fuel and increases the exhaust gas temperature. The invention is also advantageous to quickly raise the temperature of the DPF (**13**).

Further preferably, the engine exhaust gas purification apparatus further includes: combustion means (**12**), disposed in an exhaust passage (**11**) positioned upstream of the DPF (**13**), for combusting the fuel fed by the fuel injector (**5**); and detection means (**14**) for detecting a state regarding a high/low level in fuel combustibility of the combustion means (**12**), wherein when the state regarding the high/low level in fuel combustibility of the combustion means (**12**) detected by the detection means (**14**) is equal to or less than a predetermined level, the injection control means (**20**) controls the timing of the post-injection to be advanced more than a timing of the post-injection when the state regarding the high/low level in fuel combustibility of the combustion means (**12**) is higher than the predetermined level.

Accordingly, the post-injection fuel is combusted in the position upstream of the DPF (**13**), and the exhaust gas temperature is thereby raised. As a result, the temperature of the DPF (**13**) is raised to combust the soot collected in the DPF (**13**), thereby implementing the regeneration of the DPF (**13**) (recovery of the soot collecting capability). In addition, since the post-injection fuel can be avoided to be ignition-combusted after the fuel has been deposited in the DPF (**13**), it is possible to prevent the DPF (**13**) from being cracked.

Thus, when the combustion means (**12**) is in the state where the fuel cannot easily be combusted, the post-injection timing is advanced. As such, a large amount of the post-injection fuel is prevented from being fed into the combustion means (**12**) and the DPF (**13**) in a non-combusted state. Consequently, the post-injection fuel can be prevented from adversely influencing the combustion means (**12**), and the DPF (**13**) can be prevented from being cracked due to abrupt combustion of the fuel deposited in the DPF (**13**). In addition, the advanced post-injection timing causes the exhaust gas temperature to raise. Accordingly, the fuel combustibility of the combustion means (**12**) can quickly be increased. Further, an advantage can be obtained in which the temperature of the DPF (**13**) can quickly be raised to a temperature at which soot can be combusted.

In addition to the oxidation catalyst, fuel ignition means such as glow plugs, spark plugs or ceramic heat accumulators may be used as the combustion means (**12**).

In a case where an oxidation catalyst is used as the combustion means (**12**), preferably, the detection means (**14**) is oxidation catalyst temperature detection means for detecting a value regarding the temperature of the oxidation catalyst (**12**), and the injection control means (**20**) advances the timing of the post-injection in a case where the temperature of the oxidation catalyst (**12**) is equal to or less than a second predetermined temperature (**Tco**) in accordance with a detected value of the oxidation catalyst temperature detection means (**14**).

In this case, the post-injection fuel is oxidized by the oxidation catalyst (**12**), the exhaust gas temperature is raised by heat of reaction in the oxidation, and the temperature of the DPF (**13**) is thereby raised. However, in the case where the temperature of the oxidation catalyst (**12**) is low, that is, in the case where the oxidation catalyst (**12**) does not yet have a temperature sufficient to exhibit the sufficient activation and the post-injection fuel cannot be combusted, even when the post-injection is executed, the post-injected fuel is fed to the DPF (**13**) without being oxidized, and there is a possibility in that the fuel is subsequently ignition-combusted in the DPF (**13**), thereby occurring cracking of the DPF (**13**). Thus, the present invention is arranged such that the post-injection timing is advanced when the temperature of the oxidation catalyst (**12**) is equal to or less than the predetermined temperature (**Tco**).

Further preferably, in the case where the temperature of the oxidation catalyst (**12**) is higher than the second predetermined temperature (**Tco**), when the temperature of the DPF (**13**) is equal to or less than the first predetermined temperature (**Tfo**), the injection control means (**20**) controls a quantity of the post-injection per predetermined time to be reduced to be smaller than in the case where the temperature of the DPF (**13**) is higher than the first predetermined temperature (**Tfo**).

Accordingly, when the oxidation catalyst (**12**) turns into an activated state sufficient to combust the post-injection fuel, the catalytic reaction can be accelerated by feeding a reduced quantity of the post-injection fuel, and the heat of the reaction can be utilized to quickly raise the temperature of the DPF (**13**) to a temperature sufficient to combust the soot. After the temperature of the DPF (**13**) has been raised, the quantity of the post-injection fuel is increased to feed the post-injection fuel also to the DPF (**13**) to be combusted, thereby enabling soot to quickly be removed.

The case of reducing the quantity of the post-injection per predetermined time includes: a case where the quantity of one post-injection into one cylinder of, for example, a multi-cylinder engine is reduced; and a case where the number of cylinders into which the post-injection is executed after the main-injection is reduced without changing the quantity of the one post-injection.

Further preferably, when a state regarding a high/low level of fuel combustibility of the combustion means (**12**) is equal to or less than a predetermined level, the timing of the post-injection is advanced more than that the case where the state is higher than the predetermined level. In this case, when the state regarding the high/low level in fuel combustibility of the combustion means (**12**) is equal to or less than the predetermined level, the injection control means (**20**) executes the post-injection so that combustion of the post-injected fuel in the combustion chamber (**4**) commences in a period of time from a time point of 5 degrees before a crank angle at which a heat generation rate in the combustion of the main-injected fuel becomes approximately zero to a time point of 10 degrees after the crank angle.

Accordingly, when the combustion means (**12**) is in a state where fuel cannot easily be combusted, combustion of the post-injection fuel is commenced at about time when the heat generation rate in the main-combustion becomes approximately zero. Thereby, recombustion of soot occurring in diffusion combustion of the main-injection fuel is accelerated, and the quantity of the soot can be reduced. Further, the discharge amount of non-combusted fuel can be reduced, and exhaust gas temperature is thereby raised. Consequently, the temperature of the DPF (**13**) can quickly be raised.

### BRIEF DESCRIPTION OF THE DRAWINGS

Fig. **1** is an overall configuration view of a diesel-engine exhaust gas purification apparatus.
Fig. **2** is a flowchart of fuel injection control.
Fig. **3** is a time chart of the fuel injection and rates of heat generation.
Fig. **4** is a graph showing the relationship between the post-injection timing and a soot discharge amount.
Fig. **5** is a graph showing the relationship between the post-injection timing and an exhaust gas temperature.
Fig. **6** is a graph showing the relationship between the post-injection timing and a HC discharge amount.

### DETAILED DESCRIPTION OF THE INVENTION

Hereinafter, description will be given of a preferred embodiment of the present invention with reference to the drawings.

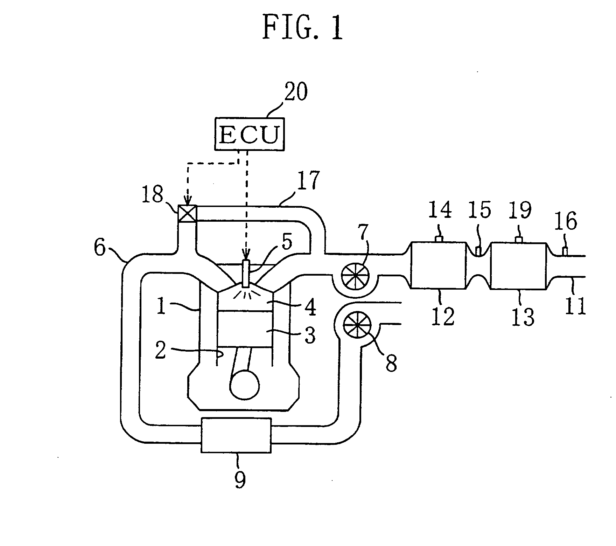

Fig. **1** shows an example of an engine exhaust gas purification apparatus according to the embodiment of the present invention, in which numeral **1** denotes a diesel engine equipped with a vehicle. The diesel engine **1** includes a plurality of cylinders **2**, **2**, ... (only one of which is shown). A piston **3** is inserted into each cylinder **2** to be reciprocatable, in which the piston **3** and a cylinder head partitively form a combustion chamber **4** in the cylinder **2**. An injector **5** (fuel injection valve) is disposed in a ceiling portion of the combustion chamber **4**, in which high pressure fuel is directly injected from a nozzle hole formed at an end portion of the injector **5** to the combustion chamber **4**.

An air intake passage **6** for supplying air (refreshed air) is connected to the combustion chamber **4** of each cylinder **2**. A blower **8** and an inter-cooler **9** are provided in the air intake passage **6**. The blower **8** is driven by a turbine **7** described below to compress intake gas compressed by the blower **8** and supplies the gas into the combustion chamber **4**. The inter-cooler **9** cools the intake gas compressed by the blower **8**.

In addition, the combustion chamber **4** of the cylinder **2** is connected to an exhaust passage **11** that emits combustion gas (exhaust gas). In the exhaust passage **11**, there are disposed the turbine **7**, which is rotated by exhaust gas flow, an oxidation catalyst **12**, and a diesel particulate filter **13** ("DPF") in the order from the upstream to downstream sides. The turbine **7** and the blower **8** together form a turbocharger.

The oxidation catalyst **12** acts for the oxidation of HC (non-combusted fuel component) and CO in the exhaust gas. The oxidation catalyst **12** is formed by coating noble metal based catalyst (for example, Pt and Pd are supported to γ-alumina) on a honeycombed cordierite carrier, in which all cells of the carrier have two ends that are kept open. The DPF **13** is of a cordierite honeycombed wall flow type in which end surfaces of the respective cells constituting the filter are alternately sealed. In addition, oxidation catalyst is coated on the DPF **13**. It is noted that the carrier of the oxidation catalyst **12** and the DPF **13**, for example, may be formed using a silica or inorganic porous material instead of the cordierite material.

A temperature sensor **14** is provided to the oxidation catalyst **12** to detect the temperature thereof. Further, exhaust pressure sensors **15** and **16** are provided on the upstream and downstream sides of the DPF **13**. In addition, a temperature sensor **19** is provided to the DPF **13** to detect the temperature thereof.

An upstream end of an exhaust gas recirculation passage **17** (hereinafter, referred to as an "EGR passage") is connected to a portion of the exhaust passage **11**, the portion being positioned further upstream from the turbine **7**. A downstream end of the EGR passage **17** is connected to the air intake passage **6**, which is positioned downstream of the inter-cooler **9**. In this configuration, exhaust gas is partly returned to the air intake passage 6. In addition, an exhaust gas recirculation amount adjusting valve **18** (hereinafter, referred to as an "EGR valve") is provided in the EGR passage **17**.

The injector **5** and the EGR valve **18** operate in response to a control signal transmitted from an electronic control unit **20** (hereinafter, referred to as an "ECU"). The ECU **20** receives output signals of various devices, such as the temperature sensors **14** and **19**, the exhaust pressure sensors **15** and **16**, a crank angle sensor for detecting the rotation angle of a crank shaft, an engine water temperature sensor for detecting the cooling water temperature, an intake pressure sensor for detecting the pressure state of intake air, an airflow sensor for detecting an engine intake air amount, an accelerator opening sensor for detecting the accelerator pedal depression amount (degree of the accelerator opening).

### (Fuel Injection Control)

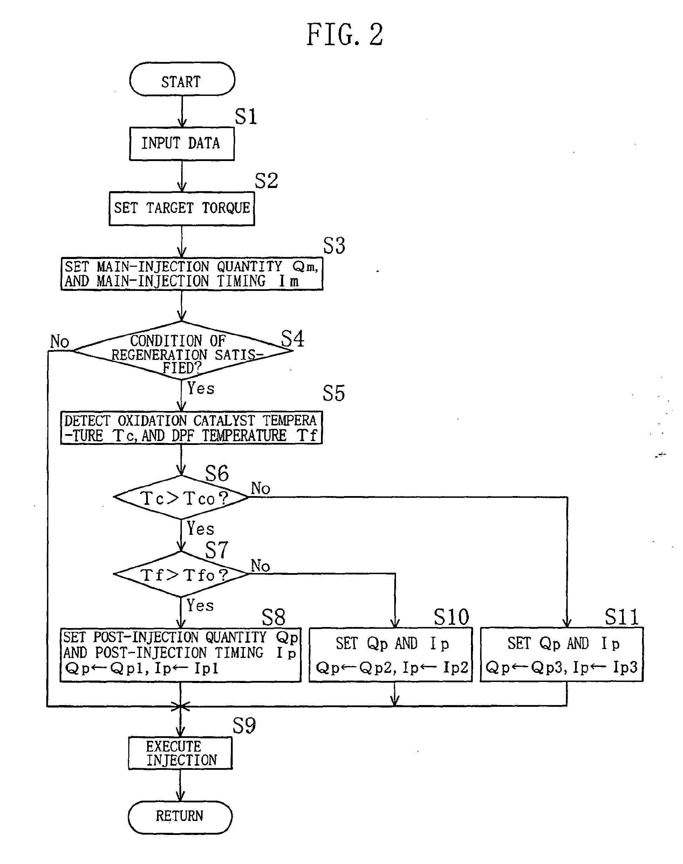

Description will be given of a procedure of fuel injection control (control for the injector **5**) by the ECU **20** with reference to a flowchart shown in Fig. **2**. After the start, in step **S1**, signals or the like are inputted from, for example, the crank angle sensor, the engine water temperature sensor, the intake pressure sensor, the airflow sensor, the accelerator opening sensor, the temperature sensor **14**, and **19**, exhaust pressure sensors **15** and **16** (data input). Subsequently, in step **S2**, a target torque Tr of the engine **1** is set in accordance with a torque map preset in accordance with the engine speed and the degree of the accelerator opening. The engine speed is obtained from a crank-angle signal and the torque map is electronically stored. The target torque Tr is determined to be higher as the degree of the accelerator opening increases or the engine speed increases.

Subsequently, in step **S3**, in accordance with the target torque Tr and the engine speed, a main-injection quantity **Qm** is set, and a main-injection timing **Im** is set. The main-injection quantity **Qm** and main-injection timing **Im** are set in accordance with individual maps that are preset and electronically stored. The main-injection quantity **Qm** is determined to be higher as the target torque **Tr** increases or the engine speed increases. The main-injection timing **Im** is determined in consideration that the fuel-spray ignition delay time is different when a factor, such as engine water temperature or engine speed is different.

Subsequently, in step **S4**, it is determined whether a condition of regeneration of the DPF **13** is satisfied. Specifically, it is determined whether soot collected in the DPF **13** needs to be reduced. The condition is satisfied when the difference between the exhaust pressures on the upstream and downstream sides of the DPF **13** is equal to or more than a predetermined value according to the exhaust pressure sensors **15** and **16**, and concurrently, the engine load is equal to or more than a predetermined value (or, the engine speed is equal to or more than a predetermined value).

When the differential pressure is equal to or more than the predetermined value, the wall flow of the exhaust gas is deteriorated. Specifically, the deterioration of exhaust gas flow represents the increase in the amount of soot collected in the DPF **13**, so that the soot needs to be combusted. The engine operation state is used as the condition of regeneration for the reason that unless otherwise the exhaust gas temperature is high to some degree, soot in the DPF **13** does not bum efficiently. As such, the DPF **13** is not regenerated in an idle operation mode of engine.

In the subsequent step **S5**, a temperature **Tc** of the oxidation catalyst **12** and a temperature **Tf** of the DPF **13** are detected in accordance with outputs of the temperature sensors **14** and **19**. In this case, the catalyst temperature **Tc** and the DPF temperature **Tf** may be estimated from the engine operation state. Subsequently, in step **S6**, it is determined whether the temperature **Tc** of the oxidation catalyst **12** is higher than a second predetermined temperature **Tco**. The second predetermined temperature **Tco** is set in correspondence with a temperature (for example, about 200°C) at which the oxidation catalyst **12** exhibits relatively high activity.

In step **S6**, when the catalyst temperature **Tc** is determined higher than the second predetermined temperature **Tco**, the process proceeds to step **S7** and it is determined whether the DPF temperature **Tf** is higher than a first predetermined temperature **Tfo**. The first predetermined temperature **Tfo** is a temperature at which the post-injection fuel is combusted by the DPF **13**, thereby enabling combustion and removal of the soot. That is, the first predetermined temperature **Tfo** corresponds to the regeneration temperature. In this case, the relation of the temperatures is "**Tfo** > **Tco**".

In step **S7**, when the DPF temperature **Tf** is determined to be higher than the first predetermined temperature **Tfo**, the process proceeds to step **S8**. In step **S8**, a post-injection fuel quantity **Qp** is set to **Qp1** and post-injection timing **Ip** is set to **Ip1**, respectively. The post-injection is performed to supply non-combusted **HC** (fuel) to the oxidation catalyst **12** for oxidation thereof and to obtain the heat of reaction in order to raise the temperature of the DPF **13**. Further, this post-injection is performed to cause the fuel to reach the DPF **13** through the oxidation catalyst **12** and to combust therein, thereby removing the soot therefrom.

Accordingly, the post-injection timing **Ip1** is set to 60 to 120°CA (preferably, 80 to 100°CA) after a top dead center in a compression stroke so that post-injection fuel is not combusted in the combustion chamber.

Subsequently, in step **S9**, a main-injection of fuel is executed in accordance with the main-injection quantity **Qm** and the main-injection timing **Im** that have been set in step **S3**. Further, a post-injection of fuel is executed in accordance with the post-injection quantity **Qp1** and the post-injection timing **Ip1** that have been set in step **S8**. The post-injection is not subsequently performed when the post-injection after four main-injections have been executed in series. That is, the post-injections are intermittently executed with one unexecution every four series executions. Of course, the arrangement may be made such that the post-injection is always executed after the main-injection; that is, the post-injection is executed at all times with respect to the cylinder.

In step **S7**, when the DPF temperature **Tf** is determined to be equal to or less than the first predetermined temperature **Tfo**, the process proceeds to step **S10**. In step **S10**, the post-injection fuel quantity **Qp** is set to **Qp2** and the post-injection timing **Ip** is set to **Ip2,** respectively. Then, the process proceeds to step **S9**. Since the temperature of DPF **13** has not yet reached the regeneration temperature, the post-injection in this case is performed to feed non-combusted HC (fuel) to the oxidation catalyst **12** for oxidation. Further, the post-injection utilizes heat of the reaction of the oxidation to quickly raise the temperature of the DPF **13** to the regeneration temperature. In this case, the post-injection quantity **Qp2** is set smaller than the post-injection timing **Qp1** set in step **S8**. Concurrently, the post-injection timing **Ip2** is set to the same value as that of the post-injection timing **Ip1** set in step **S8**, or is set to a value close to the value of the post-injection timing **Ip1** set in step **S8**.

In step **S6**, when the temperature **Tc** of the oxidation catalyst **12** is determined to be equal to or less than the second predetermined temperature **Tco**, the process proceeds to step **S11**. In step **S11**, the post-injection fuel quantity **Qp** is set to **Qp3** and the post-injection timing **Ip** is set to **Ip3**, respectively. Then, the process proceeds to step **S9**. The post-injection in this case is performed for purposes that while the amounts of soot discharge from the engine and the amount of HC discharge therefrom are reduced, the exhaust gas temperature is raised, so that the temperature of the oxidation catalyst **12** is quickly raised to the second predetermined temperature **Tco**. In this case, the post-injection quantity **Qp3** is set smaller than the post-injection quantity **Qp2** set in step **S11**. Concurrently, the post-injection timing **Ip3** is advanced more than the post-injection timing **Ip1** set in step **S8**. More specifically, the post-injection timing **Ip3** is set to cause combustion of the post-injection fuel to commence at about a point of time when the heat generation rate in the main-combustion (combustion of the main-injection fuel described above) becomes approximately zero (during a period of time from a time point of 5 degrees before a crank angle at which the heat generation rate in the main-injection becomes approximately zero to a time point of 10 degrees after the crank angle).

In step **S4**, when the condition of regeneration of the DPF **13** is determined to be unsatisfied, a main-injection of fuel is executed in accordance with the main-injection quantity **Qm** and the main-injection timing **Im** that have been set in step **S3** (steps **S4 → S9**).

The point of time when the heat generation rate in the main-combustion has become substantially zero is variable depending on, for example, the main-injection commence time, the main-injection quantity, the mode of injection (whether the fuel is collectively injected or split-injected), and the last injection timing in split injection. In addition, even when the first post-injection is executed, ignition does not occur instantaneously, but occurs with a delay. Further, a drive delay takes place for a time before the injector **5** actually opens after a drive signal therefor has been outputted.

As such, the post-injection timing is determined in such a manner as described. Experiments are conducted to preliminarily obtain points of time when the heat generation rate in the main-combustion has become substantially zero in individual engine operation modes and, in addition thereto, the ignition delay and the drive delay are taken into account. Then, post-injection timings are each determined so that combustion of the post-injection fuel commences when the heat generation rate has become a equal to or less than a predetermined value, or at the point of time when the heat generation rate has become substantially zero, or within a predetermined period of time close to the point of time. Data of the timings thus determined may be mapped and electronically stored corresponding to the engine operation modes, whereby the injection timing can be set corresponding to the engine operation mode in accordance with the mapped data.

The point of time when the heat generation rate in the main-combustion becomes substantially zero can be obtained in the following manner. Intra-cylinder pressure data in units of each crank angle in each of the engine operation modes is obtained by conducting experiments, the heat generation rate is thermodynamically calculated in accordance with the pressure data, and the result is represented in the form of a graph.

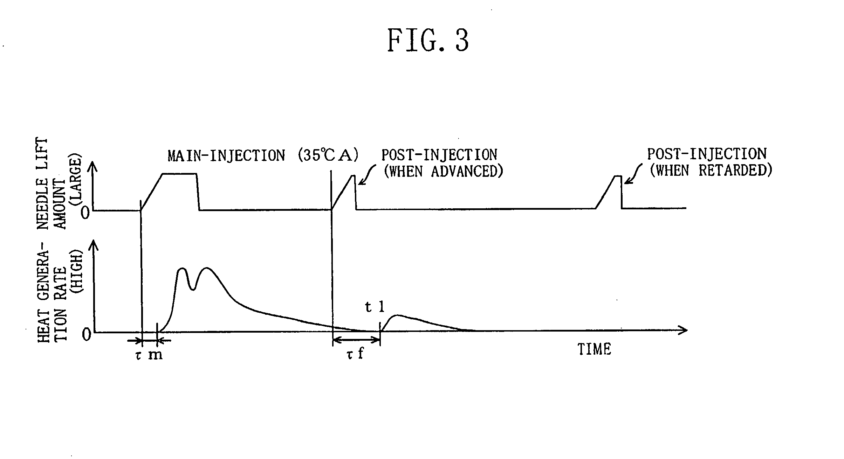

The heat generation rate thus obtained is illustrated in Fig. **3**. As shown in the figure, after commencing the main-injection of the fuel, ignition combustion is commenced with an ignition delay time τm being elapsed and, after the heat generation rate indicates a large value in a positive direction, the heat generation rate becomes zero (0) in accordance with the completion of the diffusion combustion. As such, the post-injection timing is obtained on the basis of a point of time t1 (time point) when the rate of heat generation becomes approximately zero. Shown in Fig. **3** is in an intermediate-speed/intermediate-load operation mode of the engine (engine speed Ne: 2000 rpm, mean effective pressure **Pe**: 0.57 Mpa).

An ignition **τf** of the post-injection fuel is variable depending on, for example, the engine displacement and fuel injection pressure. However, in an engine in a class with a displacement of 1 to 3L, the ignition delay **τf** is ranged from 0.4 to 0.7 ms when the fuel injection pressure is ranged from 50 to 200 Mpa.

According to experiments, in the intermediate-speed/intermediate-load operation mode, when the post-injection timing was at a 35°CA (crank angle) ATDC, the post-injection fuel was ignition-combusted at the point of time when the heat generation rate in the main-combustion became approximately zero. The ignition delay **τf** of the post-injection fuel is about 0.5 ms.

The configuration may be arranged to include combustion-state determining means that determines the state of the above-described diffusive combustion in accordance to a signal, such as a detection signal of a temperature sensor for detecting the temperature in the combustion chamber **4**, a detection signal of a combustion light sensor, or a detection signal of a sensor that detects the quantities of, for example, hydrogen and hydrocarbon existing in the combustion chamber **4** and having biased electric charges and high reactivity. In the combustion-state determining means, a determination is made whether, for example, after a main-injection, the temperature is lower than a predetermined temperature, combustion light is not emitted, or the quantities of hydrogen, hydrocarbon, and the like are abruptly decreased. Thereby, a point of time when the heat generation rate in the main-combustion has become substantially zero is obtained, and the post-injection timing for a subsequent combustion cycle is set in accordance with the obtained point of time. Further, the arrangement may be made such that a differential value of a value obtained by subtracting an adiabatic expansion temperature from an intra-cylinder temperature detected by a temperature sensor is found and a point of time when the differential value becomes zero from a minus value is detected, thereby determining a point of time when the heat generation rate in the diffusion combustion becomes zero.

Thus, when the condition of regeneration of the DPF **13** is not satisfied (the amount of collected soot is still small or the engine load is less than a predetermined value (or, the engine speed is less than a predetermined value)), only the main-injection of the fuel is executed corresponding to a required engine operation mode. However, when the condition of regeneration of the DPF **13** is satisfied, the post-injection of the fuel is executed.

However, even when the condition of regeneration of the DPF **13** is satisfied, when the temperature of the oxidation catalyst **12** is low (i.e., when **Tc** ≤ **Tco**), the post-injection quantity **Qp** of the fuel is reduced (**Qp** ← **Qp3**). Concurrently, the post-injection timing is set to cause the combustion of the post-injection fuel to commence at about a point of time when the heat generation rate in the main-combustion becomes approximately zero (**Ip ← Ip3**).

Accordingly, the post-injection fuel is combusted in the cylinder without reaching and depositing to the oxidation catalyst **12** or the DPF **13** in a non-combusted state. Therefore, there are no disadvantages in that the oxidation catalyst **12** is deteriorated due to excessive temperature rise caused by combusting the deposited fuel and the DPF **13** has a temperature abruptly raised by combusting the deposited fuel or receives an excessively high combustion pressure. Consequently, the DPF **13** can be prevented from being damaged.

Accordingly, soot caused by diffusion combustion of the main-injection fuel is combusted again in the cylinder upon supply of the post-injection fuel, consequently reducing the soot discharge amount. In addition, since the post-injection fuel is combusted in the cylinder, the HC discharge amount is reduced. Further, the combustion of the post-injection fuel causes a rise in the exhaust gas temperature, thereby implementing accelerated temperature rises of the oxidation catalyst **12** and the DPF **13**.

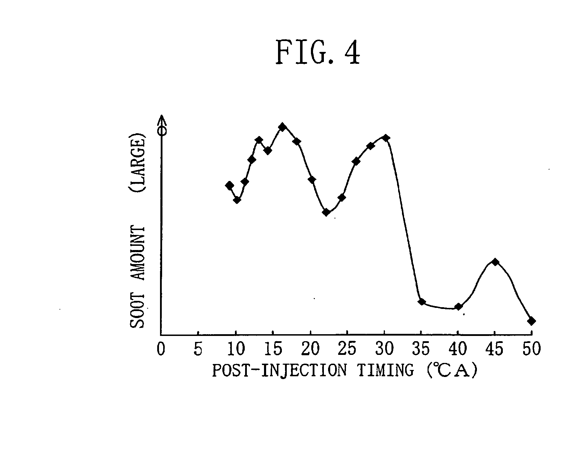

That is, in the intermediate-speed/intermediate-load operation mode of the engine (engine speed Ne: 2000 rpm, mean effective pressure **Pe**: 0.57 Mpa), experiments were conducted to measure soot discharge amounts by variously changing the post-injection timing for the fuel. The post-injection quantity was set to one sixth of the main-injection quantity. In the measurement, the EGR percentage was adjusted to cause a NOx discharge amount to be 120 ppm. The results are shown in Fig. **4**. The results verified that the soot discharge amount is significantly reduced when the post-injection timing is set to a range of from 35°CA to 40°CA ATDC in a compression stroke. In the figure, a void circle put on the portion where the post-injection timing is 0°CA represents a case where the post-injection quantity is zero.

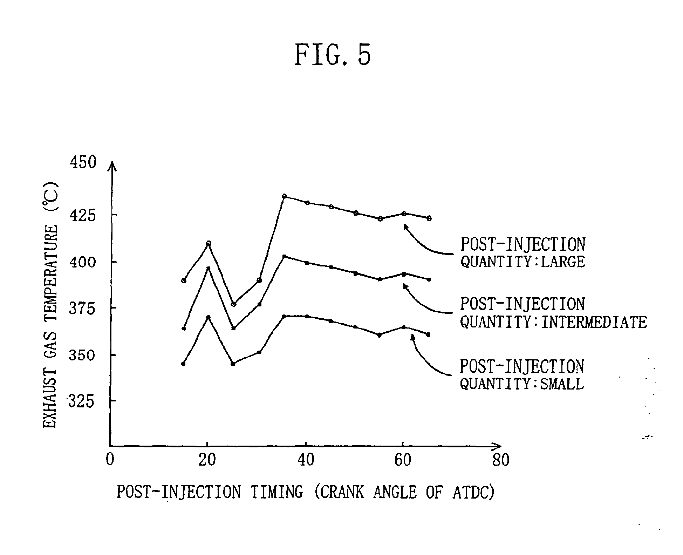

Further, in the intermediate-speed/intermediate-load operation mode, experiments were conducted to measure the exhaust gas temperature by variously changing the post-injection timing and the post-injection quantity. As a result, as shown in Fig. **5**, the exhaust gas temperature increases to be highest when the post-injection timing was set to about 35°CA ATDC at which the heat generation rate in the main-combustion becomes approximately zero. In addition, it was known that as the post-injection timing is retarded to be later than 35°CA ATDC, the exhaust gas temperature slowly decreases. Also known was that the exhaust gas temperature becomes higher as the post-injection quantity is larger.

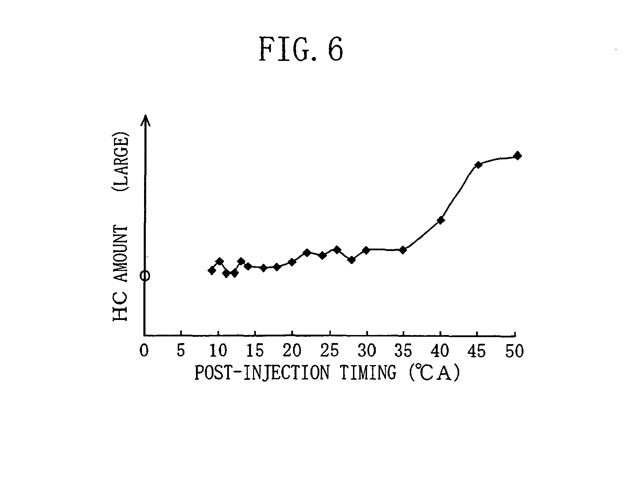

In addition, when the relationships between the post-injection timings and the HC amount during exhaust gas were investigated, there was no abrupt increase of the HC amount to the vicinity of 35°CA ATDC at the time of the intermediate-speed/intermediate-load mode as shown in Fig. **6**.

From the above description, it is found that when the combustion of the post-injection fuel is controlled to commence at about a point of time when the heat generation rate of the main-combustion becomes approximately zero, the exhaust gas temperature can be increased while the soot discharge amount is reduced, and further increase in the HC discharge amount is suppressed.

Even in the case where the temperature of the oxidation catalyst **12** is high (**Tc** > **Tco**), when the temperature of the DPF **13** is still low (**Tf** ≤ **Tfo**), the post-injection fuel quantity **Qp** is increased from **Qp3** to **Qp2**, and the post-injection timing **Ip** is retarded from **Ip3** to **Ip2**. Accordingly, the post-injection fuel is not combusted in the cylinder and is discharged to the exhaust passage **11**. As such, oxidation reaction of the fuel fed by the post-injection progresses in the oxidation catalyst **12**, and heat of the reaction generated therein causes the temperature of the DPF **13** to raise. In this case, the level of increase in the post-injection quantity is not high, so that non-combusted fuel can be prevented from flowing into and being deposited in the DPF **13**.

Next, when the temperature of the DPF **13** rises up to the level of regeneration temperature (**Tf** > **Tfo**), the post-injection fuel quantity **Qp** increases from **Qp2** to **Qp1**, and the post-injection timing **Ip** changes from **Ip2** to **Ip1**. Accordingly, combustion of soot commences in the DPF **13**, the post-injection fuel is partly fed also to the DPF **13** through the oxidation catalyst **12**, and the post-injection fuel is combusted in the DPF **13**. Thereby, combustion of the soot is accelerated, and quick regeneration of the DPF **13** can be implemented.

In addition, as in the above-described embodiment, when the oxidation catalyst **12** is provided upstream of the DPF **13**, NO contained in exhaust gas is oxidized to be NO₂ in the oxidation catalyst **12**, and soot collected in the DPF **13** can be combusted with NO₂. Since combustion of the soot with NO₂ occurs at a temperature from 250 to 300°C, after the temperature of the DPF **13** is raised by the heat of the reaction in the oxidation catalyst **12**, the regeneration of the DPF **13** can be implemented even with a post-injection quantity not so largely increased. This is advantageous to improve the fuel economy.

According to the embodiment, the deposition amount of soot in the DPF **13** is detected in accordance with the difference of pressures in the front and rear portions of the DPF **13**. However, since the soot generation amount is dependent on the engine operation mode, the deposition amount of soot in the DPF **13** may be obtained from an engine operation history.

Further, the oxidation catalyst **12** may be disposed in a position of the exhaust passage **11** upstream of the turbine **7**.

The embodiment uses the oxidation catalyst **12** as combustion means that causes the post-injection fuel to be ignition-combusted before reaching the DPF **13**. However, in a configuration using glow plugs, spark plugs, or ceramic heat accumulators are used, when the temperatures thereof are low or when the exhaust gas temperature is low and the ignitionability is therefore low, the post-injection is inhibited.

The value regarding the temperature of the oxidation catalyst (combustion means) **12**, the temperature of the catalyst itself or the catalyst container is detected by the temperature detection sensor **14** and employed, as described above. Alternatively, the exhaust gas temperature at, for example, an entry of the catalyst or the exhaust gas temperature at an exit of the catalyst may be detected and employed.

## Claims

1. An engine exhaust gas purification apparatus comprising:
a fuel injector (5) for feeding fuel to a combustion chamber (4) of a diesel engine (1);
a diesel particulate filter ("DPF") (13) disposed in an exhaust passage (11) of the diesel engine (1) to collect soot in an exhaust gas;
an oxidation catalyst (12), disposed in an exhaust passage (11) positioned upstream of the DPF (13), for combusting the fuel fed by the fuel injector (5);
collection-amount detection means (15, 16) for detecting values regarding the amount of soot collected by the DPF (13);
DPF temperature detection means (19) for detecting a value regarding the temperature of the DPF (13); and
injection control means (20) for executing a post-injection so that the fuel injector (5) injects the fuel during the expansion stroke or the exhaust stroke after a main-injection so that the fuel injector (5) injects the fuel at or in the vicinity of a top dead center of the compression stroke in order to raise the temperature of DPF (**13**) when the amount of the collected soot is determined in accordance with detected values of the collection-amount detection means (15, 16) to be equal to or more than a predetermined value, and for advancing the timing of the post-injection more in a case where the temperature of the DPF (13) is equal to or less than a first predetermined temperature (Tfo), which enable the DPF (13) to combust the fuel fed by the post-injection than in a case where the temperature of the DPF (13) is higher than the first predetermined temperature (Tfo), in accordance with a detected value of the DPF temperature detection means (19).
**characterized in that**
the engine exhaust gas purification apparatus further comprises oxidation catalyst temperature detection means (14) for detecting a value regarding the temperature of the oxidation catalyst (12),
wherein when the temperature of the oxidation catalyst (12) is higher than a second predetermined temperature (Tco) at which the oxidation catalyst (12) exhibits activity in accordance with a detected value of the oxidation catalyst temperature detection means (14), the injection control means (20) controls a timing of the post-injection to be advanced less than that in the case the temperature of the oxidation catalyst (12) is equal to or less than the second predetermined temperature (Tco) so that the post-injection fuel is supplied to the oxidation catalyst (12), and
wherein in the case where the temperature of the oxidation catalyst (12) is higher than the second predetermined temperature (Tco), when the temperature of the DPF (13) detected by the DPF temperature detection means (19) is higher than the first predetermined temperature (Tfo), the injection control means (20) increases a quantity of the post-injection per predetermined time to be larger than in the case where the temperature of the DPF (13) is equal to or less than the first predetermined temperature (Tfo).

## Patentansprüche

1. Vorrichtung zur Reinigung von Abgasen eines Motors, umfassend:
eine Kraftstoffeinspritzeinrichtung (5) zum Zuführen von Kraftstoff zu einer Verbrennungskammer (4) eines Dieselmotors (1);
ein Dieselteilchenfilter ("DPF") (13), welches in einem Abgasdurchtritt (11) des Dieselmotors (1) angeordnet ist, um Ruß in einem Abgas zu sammeln;
einen Oxidationskatalysator (12), welcher in einem Abgasdurchtritt (11) angeordnet ist, welcher stromaufwärts von dem DPF (13) positioniert ist, um den durch die Kraftstoffeinspritzeinrichtung (5) zugeführten Kraftstoff zu verbrennen;
Sammelmengen-Detektionsmittel (15, 16) zum Detektieren von Werten betreffend die Menge an Ruß, welche durch das DPF (13) gesammelt ist;
DPF-Temperatur-Detektionsmittel (19) zum Detektieren eines Werts, betreffend die Temperatur des DPF (13); und
Einspritz-Steuer- bzw. -Regelmittel (20) zum Ausführen einer Nacheinspritzung, so daß die Kraftstoffeinspritzeinrichtung (5) den Kraftstoff während des Expansionshubs nach einer Haupteinspritzung einspritzt, so daß die Kraftstoffeinspritzeinrichtung (5) den Kraftstoff an oder in der Nähe eines oberen Totpunkts des Kompressions- bzw. Verdichtungshubs einspritzt, um die Temperatur des DPF (13) anzuheben, wenn für die Menge des gesammelten Rußes in Übereinstimmung mit detektierten Werten der Sammelmengen-Detektionsmittel (15, 16) bestimmt ist bzw. wird, daß sie gleich oder mehr als ein vorbestimmter Wert ist, und zum Vorrücken bzw. Vorstellen des Zeitpunkts der Nacheinspritzung weiter in einem Fall, wo die Temperatur des DPF (13) gleich oder geringer als eine erste vorbestimmte Temperatur (Tfo) ist, welches dem DPF (13) ermöglicht, den durch die Nacheinspritzung zugeführten Kraftstoff zu verbrennen, als in einem Fall, wo die Temperatur des DPF (13) höher als die erste vorbestimmte Temperatur (Tfo) ist, in Übereinstimmung mit einem detektierten Wert der DPF-Temperatur-Detektionsmittel (19),
**dadurch gekennzeichnet, daß**
die Vorrichtung zur Reinigung von Abgasen eines Motors weiterhin Oxidationskatalysatortemperatur-Detektionsmittel (14) zum Detektieren eines Werts betreffend die Temperatur des Oxidationskatalysators (12) umfaßt,
wobei, wenn die Temperatur des Oxidationskatalysators (12) höher als eine zweite vorbestimmte Temperatur (Tco) ist, bei welcher der Oxidationskatalysator (12) eine Aktivität in Übereinstimmung mit einem detektierten Wert der Oxidationskatalysatortemperatur-Detektionsmittel (14) zeigt, die Einspritz-Regel- bzw. - Steuermittel (20) einen Zeitpunkt der Nacheinspritzung regeln bzw. steuern, um weniger als in dem Fall vorgerückt bzw. vorgestellt zu werden, in welchem die Temperatur des Oxidationskatalysators (12) gleich wie oder geringer als die zweite vorbestimmte Temperatur (Tco) ist, so daß der Nacheinspritzungs-Kraftstoff zu dem Oxidationskatalysator (12) zugeführt ist bzw. wird, und
wobei in dem Fall, wo die Temperatur des Oxidationskatalysators (12) höher als die zweite vorbestimmte Temperatur (Tco) ist, wenn die Temperatur des DPF (13), welche durch die DPF-Temperatur-Detektionsmittel (19) detektiert ist bzw. wird, höher als die erste vorbestimmte Temperatur (Tfo) ist, die Einspritz-Regel- bzw. - Steuermittel (20) eine Menge der Nacheinspritzung pro bestimmter Zeit erhöhen, um größer als in dem Fall zu sein, wo die Temperatur des DPF (13) gleich wie oder geringer als die erste vorbestimmte Temperatur (Tfo) ist.

## Revendications

1. Appareil de purification des gaz d'échappement d'un moteur, qui comprend :
un injecteur de carburant (5) qui injecte du carburant dans une chambre de combustion (3) d'un moteur diesel (1);
un filtre à particules diesel ("diesel particulate filter" - DPF) (13) disposé dans le passage d'échappement (11) du moteur diesel (1) pour recueillir les suies présentes dans les gaz d'échappement;
un catalyseur d'oxydation (12) disposé dans le passage d'échappement (11) en amont du DPF (13) pour brûler le carburant injecté par l'injecteur de carburant (5);
un moyen (15, 16) de détection de la quantité recueillie qui détecte des valeurs associées à la quantité de suie recueillies par le DPF (13);
un moyen (19) de détection de la température du DPF qui détecte une valeur associée à la température du DPF (13) et
un moyen (20) de contrôle de l'injection qui exécute une post-injection de telle sorte que l'injecteur de carburant (5) injecte le carburant pendant la course de détente qui suit l'injection principale, de telle sorte que l'injecteur de carburant (5) injecte le carburant au point mort haut ou au voisinage du point mort haut de la course de compression de manière à augmenter la température du DPF (13) lorsque la quantité de suie recueillie déterminée à partir des valeurs détectées par le moyen (15, 16) de détection de la quantité recueillie est égale ou supérieure à une valeur prédéterminée, et qui lorsque la température du DPF (13) est égale ou inférieure à une première température prédéterminée (Tfo) qui permet au DPF (13) de brûler le carburant injecté par la post-injection, avance davantage l'instant de la post-injection que lorsque la température du DPF (13) est supérieure à la première température prédéterminée (Tfo) en accord avec la valeur détectée par le moyen (19) de détection de la température du DPF,
**caractérisé en ce que**
l'appareil de purification des gaz d'échappement du moteur comprend en outre un moyen (14) de détection de la température du catalyseur d'oxydation qui détecte une valeur associée à la température du catalyseur d'oxydation (12),
**en ce que** lorsque la température du catalyseur d'oxydation (12) est supérieure à une deuxième température prédéterminée (Tco) à laquelle le catalyseur d'oxydation (12) déploie une activité conforme à une valeur détectée par le moyen (14) de détection de la température du catalyseur d'oxydation, le moyen (20) de contrôle de l'injection avance moins l'instant de la post-injection que lorsque la température du catalyseur d'oxydation (12) est égale ou inférieure à la deuxième température prédéterminée (Tco), de sorte que le carburant de post-injection est délivré au catalyseur d'oxydation (12) et
**en ce que** lorsque la température du catalyseur d'oxydation (12) est supérieure à la deuxième température prédéterminée (Tco) et lorsque la température du DPF (13) détectée par le moyen (19) de détection de la température du DPF est supérieure à la première température prédéterminée (Tfo), le moyen (20) de contrôle de l'injection augmente la quantité de post-injection pendant une durée prédéterminée de telle sorte qu'elle soit supérieure à la quantité post-injectée lorsque la température du DPF (13) est égale ou inférieure à la première température prédéterminée (Tfo).
